# EUROPÄISCHE PATENTSCHRIFT

(11) **EP 0 526 864 B1**
(45) Veröffentlichungstag und Bekanntmachung des Hinweises auf die Patenterteilung: **22.05.1996**
(21) Anmeldenummer: 92113206.4
(22) Anmeldetag: 03.08.1992
(51) Int. Cl.: B01D 53/00, C02F 3/02

(54) **Verfahren und Einrichtung zur Geruchsfilterung von der Abwasserreinigung**
Process and apparatus for eliminating odours from waste water treatment
Procédé et dispositif d'élimination d'odeur dans le traitement d'eaux résiduaires

(30) Priorität: 06.08.1991 DE 4126010
(43) Veröffentlichungstag der Anmeldung: 10.02.1993
(73) Patentinhaber: PASSAVANT-WERKE AG, D-65322 Aarbergen 7 (DE)
(72) Erfinder: Zumbrägel, Michael, Dipl.-Ing., W-6209 Aarbergen 2 (DE)

(56) Entgegenhaltungen:
- EP-A- 0 352 891
- WO-A-91/19558
- AT-B- 389 237
- CH-A- 674 004
- M. Brunner: "Konzept zur anaeroben Abwasserreinigung in der Fruchtsaftindustrie" - Confructa Studien, Heft III/IV 1988

## Beschreibung

Die Erfindung betrifft ein Verfahren zum Behandeln der in anaeroben biologischen Abwasserreinigungsstufen gebildeten leichtflüchtigen organischen Substanzen.

In Anaerobstufen der biologischen Abwasserbehandlung werden bei den Abbauvorgängen auch leichtflüchtige organische Substanzen gebildet, die, wenn sie noch in gelöster Form vorliegen, mit dem Ablauf in die Umgebungsluft geruchsintensiv austreten. Auch die Abluft der Anaerobstufe enthält diese Substanzen in flüchtiger Form. Es ist bekannt und wird z.Z. noch praktiziert, daß der Ablauf aus der Anaerobstufe in einer Einblasstufe für sauerstoffhaltige Luft gesammelt und dort länger anhaltend belüftet wird. Hierdurch werden die zur Bildung der leichtflüchtigen Substanzen führenden anaeroben Abbauvorgänge sofort beendet. Die Abluft der Einblasstufe wird anschließend durch einen Kompostfilter geleitet. Dort wird der größte Teil der für den Geruch verantwortlichen Substanzen biologisch gebunden (M. Brunner: "Konzept zur ana eroben Abwasserreinigung in der Fruchtsaftindustrie" - Confructa Studien, Heft III/IV 1988).

Eine andere, ebenfalls z.Z. noch praktizierte Möglichkeit zur Zurückhaltung der geruchsintensiven Substanzen ist die vollständige Kapselung aller Behandlungsbecken und die Filterung der gesamten Abluft in einem Kompostfilter. Der Aufwand für diese aufgezeigte Möglichkeite ist sehr hoch. Der Effekt für beide Möglichkeiten ist nicht befriedigend.

Die Aufgabe, die Abluft- und Geruchsproblematik zu optimieren, wird erfindungsgemäß durch die im Kennzeichen von Anspruch 1 enthaltenen Verfahrensmerkmale gelöst. Dadurch, daß als Einblasluft die aus dem Luftraum über der Anaerobstufe abgesaugte Abluft verwendet wird und die die Einblasstufe verlassende Abluft noch in einem Sprühwascher gewaschen wird, werden die geruchsintensiven Substanzen restlos erfaßt und zurückgehalten. Vorzugsweise wird das Wasser für die Sprühwaschung dem Abwasser, das aus der Anaerobstufe abläuft, entnommen und nach der Sprühwaschung auch wieder dorthin zurückgeführt.

Anlagebaulich ist es sehr platzsparend, die Sprühwascheinrichtung direkt unter dem Kompostfilter anzuordnen. Die Abluft der Einblasstufe durchströmt dann die Sprühwascheinrichtung und das Kompostfilter auf dem kürzestmöglichen Weg.

Eine bevorzugt geeignete Anlage zur Durchführung des erfindungsgemäßen Verfahrens wird nachfolgend anhand der Schnittzeichnung ausführlich beschrieben.

Das aus einem (nicht dargestellten) Anaerob-Reaktor ablaufende Abwasser wird dem beckenartigen unteren Teil 1 der Behandlungseinrichtung 2 über ein Tauchrohr 3 zugeführt. Durch ein auslaufseitiges Wehr 4 ergibt sich ein definiertes Wasservolumen 5 mit definierter Aufenthaltszeit. Ein durch eine Tauchwand 6 vor dem hochgelegten Auslauf 7 gebildeter Flüssigkeits-Geruchverschluß 8 verhindert den Austritt von Gasen und Dämpfen in die Umgebungsluft.

Über ein Tauchrohr 10 und einen handelsüblichen Druckluftbelüfter 11 wird Abluft aus dem Anaerob-Reaktor abgesaugt und in das Wasservolumen 5 geblasen. Geruchsintensive Substanzen, die die Abluft enthält, werden zumindest teilweise in dem Wasservolumen gelöst. Die nichtgelösten Anteile werden anschließend in einer direkt über dem Wasservolumen liegenden Sprühwaschstufe 12 ausgewaschen. Die Sprühdüsen werden mit dem Geruchverschluß 8 mittels einer Pumpe 13 entnommenem Wasser gespeist. Die Sprühdüsen liegen unmittelbar unter einem Siebboden 15, der das Kompostfilter 16 trägt. Sowohl Abluft als auch Abwasser verlassen die Einrichtung weitgehend frei von geruchsintensiven Substanzen. Die in das Wasservolumen eingeblasene Abluft, die aus der Umgebung in der Anaerobestufe nachströmende sauerstoffhaltige Luft enthält, bewirkt dort den Übergang von anaeroben auf aerobe Abbauvorgänge, bei denen keine leichtflüchtigen geruchsintensiven Substanzen mehr entstehen.

Auch die mit der Abluft ankommenden flüchtigen und im Wasservolumen gelösten Substanzen werden biologisch aerob abgebaut und dadurch eliminiert.

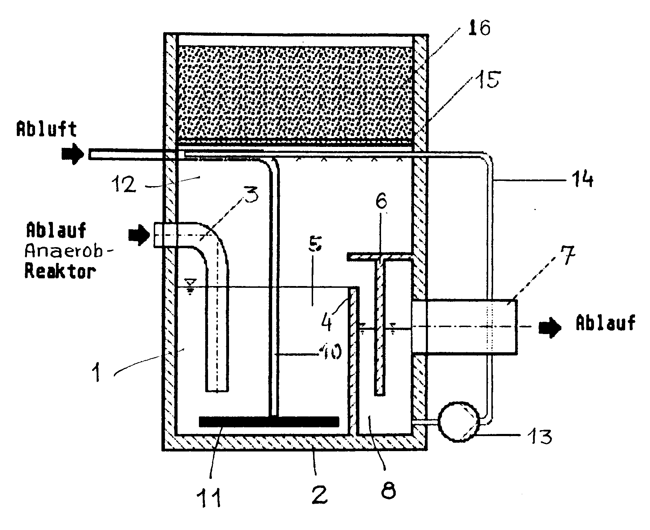

## Patentansprüche

1. Verfahren zum Behandeln der in anaeroben biologischen Reinigungsstufen für Abwässer gebildeten, mit der Abluft und dem Ablauf der Anaerobstufe austretenden leichtflüchtigen organischen Substanzen, durch Einblasen von sauerstoffhaltiger Luft in eine vom Ablauf der Anaerobstufe beschickte Einblasstufe und anschließendes Durchleiten der aus der Einblasstufe oben austretenden Abluft und der über der Anaerobestufe austretende Luft durch einen Kompostfilter, **dadurch gekennzeichnet**, daß als Einblasluft für die Einblasstufe die aus dem Luftraum über der Anaerobstufe abgesaugte Abluft verwendet wird und daß die die Einblasstufe verlassende Abluft vor Eintritt in den Kompostfilter noch in einem Sprühwascher gewaschen wird.

2. Verfahren nach Anspruch 1, **dadurch gekennzeichnet**, daß das Wasser für den Sprühwascher der Einblasstufe entnommen wird.

3. Verfahren nach Anspruch 1 oder 2, **dadurch gekennzeichnet**, daß das Sprühwasser über der Einblasstufe eingedüst wird, so daß es dorthin zurückkehrt.

4. Anlage zur Durchführung des Verfahrens nach den vorstehenden Ansprüchen, mit einem von dem aus einem Anaerobreaktor überlaufenden Abwasser beaufschlagten Belüftungsbecken (1) mit Unterwasser-Belüftungseinrichtung (11) und einem im Abluftraum des Belüftungsbeckens (1) angeordneten Kompostfilter (16), durch das die Abluft des Belüftungsbeckens geleitet wird, **dadurch gekennzeichnet**, daß im Ablauf (7) des Belüftungsbeckens (1) ein durch eine Tauchwand (6) und ein Überlaufwehr gebildeter Flüssigkeits-Geruchverschluß (8) vorgesehen ist, daß die Unterwasser-Belüftungseinrichtung (11) mit der Abluftleitung (10) des Anaerobreaktors verbunden ist und daß an der Unterseite des Kompostfilters (16) eine Sprüheinrichtung (14) vorgesehen ist.

5. Anlage nach Anspruch 4, **dadurch gekennzeichnet**, daß die Sprüheinrichtung (14) von einer dem Sumpf des Belüftungsbeckens (1) entnehmenden Pumpe (13) gespeist wird.

6. Anlage nach Anspruch 4 oder 5, **dadurch gekennzeichnet**, daß der Geruchverschluß (8) nach oben gegen die Sprühstrahlen abgedeckt ist.

## Claims

1. Procedure for treatment of organic volatile substances forming in the anaerobic-biological treatment stages for waste water and escaping with the exhaust air and the discharged water from the anaerobic treatment stage, by injection of atmospheric oxygen into the water discharged into an aeration stage and, thereafter, by passing the exhaust air from the aeration and the anaerobic treatment stages through a compost filter, **characterized in that** the air which is injected into the aeration stage is sucked off the air above the anaerobic treatment stage and that the exhaust air from the aeration and the anaerobic treatment stages is cleaned by a spray washer before entering into the compost filter.

2. Procedure according to claim 1, **characterized in that** the water for the spray washer is taken from the aeration stage.

3. Procedure according to one of the claims 1 or 2, **characterized in that** the water is sprayed above the aeration stage so that it will return there.

4. Installation to complete procedure according to above claims comprising an aeration tank (1) equipped with a submerged aerator (11) which is fed by overflowing waste water from an anaerobic reactor and a compost filter (16) located in the exhaust air area of the aeration tank so that the exhaust air is passing through this compost filter, **characterized in that** a water seal (8), formed by a baffle (6) and an overflow weir, is provided in the effluent (7) of the aeration tank (1), that the submerged aerator (11) is connected to the exhaust air pipe (10) of the anaerobic reactor, and that a spray washing device (14) is provided below the compost filter (16).

5. Installation according to claim 4, **characterized in that** a spray washing device (14) is provided below the compost filter (16), and that the spray washing device is fed by a pump (13) sucking from the well of the aeration tank.

6. Installation according to one of the claims 4 or 5, **characterized in that** the water seal (8) is protected above by a cover against the spray water.

## Revendications

1. Procédé destiné au traitement des substances organiques volatiles se formant lors du traitement anaérobie-biologique des eaux usées et s'échappant avec l'air sortant et l'eau déchargée de l'étape de traitement anaérobie, par l'intermédiaire d'insufflation d'oxygène atmosphérique dans l'eau déchargée dans une étape d'aération et, ensuite, au moyen de passer l'air d'échappement du traitement d'aération et du traitement anaérobie à travers d'un filtre à compost, **caractérizé en ce que** l'air aspiré pour l'insufflation dans l'étape d'aération est l'air sortant de l'étape de traitement anaérobie et que l'air d'échappement des étapes d'aération et anaérobie est lavé au moyen d'un pulvérisateur d'eau avant de rentrer dans le filtre à compost.

2. Procédé selon revendication 1, **caractérizé en ce que** l'eau utilisée pour le pulvérisateur d'eau est soutirée de l'étape d'aération.

3. Procédé selon une des revendications 1 ou 2, **caractérizé en ce que** l'eau est pulvérisée en-dessus de l'étape d'aération, de manière que l'eau y est retournée

4. Installation pour l'accomplissement du procédé selon les revendications citées ci-avant constituée par un bassin d'aération (1) equipé d'un dispositif d'aération immergé (11), alimenté par les eaux usées débordant le réacteur anaérobie, et par un filtre à compost (16) qui se trouve dans la chambre où arrive l'air d'échappement du bassin d'aération (1), de manière que l'air d'échappement traverse le filtre à compost, **caractérizé en ce qu**'une obturation hydraulique formé par un mur de retenue (6) et un déversoir est prévue dans la sortie d'eau (7) du bassin d'aération (1), **que** le dispositif d'aération immergé (11) est relié avec la conduite d'air d'échappement (10) du réacteur anaérobie, et **qu**'un dispositif pulvérisateur d'eau (14) est prévu au-dessous du filtre à compost (16).

5. Installation selon revendication 4, **caractérizé en ce qu**'un dispositif pulvérisateur d'eau (14) est prévu au-dessous du filtre à compost (16), et **que** le pulvérisateur d'eau est alimenté par une pompe (13) aspirant l'eau dans le basfond du bassin d'aération (1).

6. Installation selon une des revendications 4 ou 5, **caractérizé en ce que** l'obturation hydraulique (8) est protégée en haut par une couverture contre l'eau pulvérisée.
